# EUROPEAN PATENT APPLICATION

(11) **EP 4 401 306 A1**
(43) Date of publication of application: **17.07.2024**
(21) Application number: 24150468.7
(22) Date of filing: 05.01.2024
(51) Int. Cl.: H02S 20/23, F24S 25/615

(54) **FIXING ARRANGEMENT AND METHOD FOR FIXING AN ENERGY COLLECTING DEVICE TO A STRUCTURE**

(30) Priority: 16.01.2023 FI 20237006
(71) Applicant: Salomaan Konepaja Oy, 24910 Halikko As (FI)
(72) Inventor: Suominen, Pasi, 25210 Vartsala (FI); Kivelä, Petri, 24100 Salo (FI)
(74) Representative: Moosedog Oy

(57) **Abstract**

The invention relates to a fastening arrangement (1) and a method for fastening an energy collecting device (2), such as a solar panel, to a structure (3), such as a roof of a building, a mount or a wall. A fastener (4) is fastened to the structure (3), which fastener (4) comprises at least two fastening notches (6, 66). Each fastening notch comprise a fastening form (6a, 6b). An elongated profile (7) is fastened in the two fastening forms (61, 62) of the fastener to support the energy collecting device (2). The profile (7) comprises two fastening folds (9a, 9b), whereby the first fastening fold (9a) is fastened to the fastening form (6a) of the first fastening notch (6) and the second fastening fold (9b) is fastened to the fastening form (6b) of the second fastening notch (66).

## Description

### TECHNICAL FIELD OF THE INVENTION

The object of the invention is a fastening arrangement and a method for fastening an energy collecting device to a structure as described in the preambles of the independent claims set out below, as well as a roof mounting fastener. With the help of the invention, for example, a solar panel can be fastened to building structures, such as a roof or a wall or a separate mount.

### STATE OF THE ART

State-of-the-art fastening arrangements comprise various fasteners that can be fastened to structures, such as profiles, on which devices such as solar panels can be supported.

Utility model publication FI 12646 U1 sets out fastening of a profile supporting a solar panel to a fastener fastened to a structure. The fastener has a fastening notch with two symmetrical fastening forms. The profile has two sprung protrusions suitable for these fastening forms. The protrusions are pressed into the fastening notches, whereby the profile locks into the fastener with the help of spring force.

Current fastening arrangements do not offer a solution for convenient, protected, and safe placement of wiring of an energy collecting device.

Many current solutions allow energy collecting devices such as solar panels to be unintentionally or mischievously detached from their mounts with relatively little force.

The presented solutions do not satisfactorily solve a typical problem, i.e. that a force applied to the arrangement in the springing direction of the spring of the fastener can detach the fastener unintentionally. This problem is especially common with a device that is installed at an angle or vertically, such as a solar panel. For example, the force caused by an installer stepping on the fastening arrangement may cause a state-of-the-art fastener and thus the solar panel to detach from its fastening.

### OBJECT OF THE INVENTION

The object of the present invention is to reduce or even eliminate the above-mentioned problems occurring in the state of the art.

It is an of the object of the present invention to provide a solution which makes fastening an energy collecting device to a structure easy and safe and a fastening arrangement simple and yet reliable.

It is an of the object of the present invention to provide an easy way to securely install solar panels or other devices.

It is an of the object of the present invention to provide an easy way to securely install solar panels or other devices especially on slanted structures, such as roofs, or vertical structures, such as walls.

It is an of the object of the present invention to provide a convenient, protected, and safe fastening and routing place for the wiring of an energy collecting device.

### SUMMARY OF THE INVENTION

Among other things, in order to achieve the above-mentioned objects, the fastening arrangement, method, roof mounting fastener, and other objects of the invention are characterized by what is set forth in the appended independent claims.

The embodiments and advantages mentioned in this text apply, where applicable, to the fastening arrangement, method, roof mounting fastener, and other objects according to the invention, although it is not always mentioned separately.

A typical fastening arrangement according to the invention for fastening an energy collecting device, such as a solar panel, to a structure comprises at least two fasteners adapted to be fastened to the structure and a profile adapted to support the energy collecting device. The fastener comprises at least two fastening notches, of which at least two have a fastening form. The profile comprises two fastening folds, which are adapted to be fastened to the fastening forms. The first fastening fold of the profile is fastened to the fastening form of the first fastening notch, and the second fastening fold of the profile is fastened to the fastening form of the second fastening notch.

One fastening arrangement according to the invention for fastening an energy collecting device, such as a solar panel, to a structure comprises
- at least two fasteners adapted to be fastened to a structure such as a roof, mount, or wall. Each fastener comprises at least one fastening notch comprising at least one bottom, whereby the first and the second fastening forms are formed in connection with it or them. The fastening forms are at a distance from each other in the direction of the fastener;
- an elongated profile, which is adapted to be fastened to the fastening notches of at least two fasteners in the direction of the profile, i.e. perpendicular to the direction of the fastener. The profile comprises
   ∘ a support surface on which the energy collecting device can be supported and which is intended to face away from the fastener;
   ∘ the first and the second fastening fold, which are on both sides of the support surface and each of which can be adapted inside a fastening notch and against one fastening form of it, so that the profile is locked into the fastener.
There is more than one fastening notch, so that at least two or each fastening form has its own fastening notch with a bottom. Thereby, the first fastening fold of the profile is adapted to be fastened to the first fastening notch, and the second fastening fold of the profile is adapted to be fastened to the second fastening notch.

A method according to the invention for fastening an energy collecting device to a structure with a fastening arrangement comprises at least the following steps:
- at least two fasteners are fastened to a structure, such as a roof, mount, or wall, whereby each fastener comprises at least one fastening notch comprising at least one bottom and, formed in connection with it or them, a first fastening form and a second fastening form, which fastening forms are at a distance from each other in the direction of the fastener;
- an elongated profile is fastened to the fastening notches of at least two fasteners in the direction of the profile, i.e. perpendicular to the direction of the fastener, said profile comprising
   ∘ a support surface on which the energy collecting device can be supported and which is arranged to face away from the fastener,
   ∘ a first fastening fold and a second fastening fold, which are on both sides of the support surface, and each of which are adapted inside a fastening notch against one fastening form of it, and thus locking the profile into the fastener.
In one fastener there is more than one fastening notch, so that at least two or each fastening form has its own fastening notch with a bottom, whereby the first fastening fold of the profile is fastened to the first fastening notch and the second fastening fold of the profile is fastened to the second fastening notch.

It can thus be said that some objects of the invention are a fastening arrangement and a method for fastening an energy collecting device, such as a solar panel, to a structure, such as a building's roof, mount, or wall. A fastener with at least two fastening notches is fastened to the structure. At least two or both or all of the fastening forms have a fastening form. An elongated profile is fastened to two fastening forms of the fastener to support the energy collecting device. The profile has two fastening folds, whereby the first fastening fold is fastened to the fastening form of the first fastening notch and the second fastening fold is fastened to the fastening form of the second fastening notch.

A roof mounting fastener according to the invention is adapted to be fastened to, for example, the external surface of the roof. A profile can be fastened to the fastener, to which profile it is possible to fasten, for example, a solar panel or a snow barrier preventing snow from falling from the roof, or something else that needs to be fastened to the roof. The fastener comprises at least two fastening notches, each of which comprises a bottom and a fastening form formed in connection with the fastening notch. The fastening forms are at a distance from each other in the direction of the fastener. The first fastening fold of the profile is adapted to be fastened to the first fastening notch, and the second fastening fold of the profile is adapted to be fastened to the second fastening notch.

Although this text mainly handles fastening energy collecting devices to a structure, it is possible to fasten something else than an energy collecting device with the help of the invention. For example, it is possible to fasten to the roof or wall of a building a safety device or a maintenance device such as a safety ladder or other ladder, a snow barrier, or a footbridge with the help of a fastener or fastening arrangement according to the invention.

In one embodiment, the roof mounting fastener according to the invention is used as a fastener in the fastening arrangement or method according to the invention.

The energy collection device that is fastened to a structure with the help of the invention can be, for example, a device that collects solar energy, such as a solar panel, solar water heater, wind power generator.

The structure to which the energy collecting device is fastened with the help of the invention can be, for example, a roof or wall of a building or a mount intended for the energy collecting device. With the help of the invention, the energy collecting device such as a solar panel can also be installed on, for example, a ground installation mount, a boat, a telemast, a car roof, a mobile home.

The fact that one fastener has more than one fastening notch, so that each fastening form has its own fastening notch with a bottom, enables small fastening notches. It enables stronger fasteners. Machining the fastener is easy. Material is saved. Between the several fastening notches, a space or place is formed in the fastener, where other functions can be placed, such as a partition wall, reinforcements, recesses, protrusions or additional devices for various purposes.

In one embodiment, the energy collecting device is fastened to the structure on more than one profile. In one embodiment, the energy collecting device is plate-like. With the help of the invention, the plate-like energy collecting device can be installed parallel to the structure, for example parallel to the wall or roof of the building, or at a desired angle in relation to the structure, and at a desired distance from the structure determined by the fastening arrangement.

The fastener can be, for example, a mainly plate-like piece. It can be made of, for example, metal or plastic. The fastening forms are typically formed on the upper edge of the fastener. In one embodiment, one edge of the fastener, the lower edge, has fastening means for fastening it to the structure, for example a flange to be placed against the structure with openings for screws. The plate-like material easily makes a sturdy fastener. The side edges of the fastener are between the upper and lower edges. Typically, the upper edge and lower edge of the fastener are mainly straight in general shape, in one embodiment they are parallel to each other, in another application they are in the direction of the fastener. The side edges can be mainly straight. Each edge can have different shapes such as some rounding, recesses, protrusions.

In one embodiment, the two fastening forms of one fastener are of different shapes with each other and asymmetrical when viewed in the direction of the profile. The first fastening form of the fastening notch comprises a first locking form, so in the method, when the profile is locked into the fastener:
- the first locking form prevents movement of the first fastening fold arranged inside the first fastening form in the direction of the fastener towards the second fastening form;
   while at the same time
- the second fastening form allows movement of the second fastening fold arranged inside it in the direction of the fastener towards the first fastening form.

Asymmetry creates opportunities for new versatile functions. The different fastening forms of one fastener and the profile fastening folds to be fastened to them can work together in different ways.

In one embodiment, a partition wall is formed on the upper edge of the fastener, between the first and the second fastening notch, separating them. The partition wall can be an integral part of the fastener, a protrusion formed between two fastening notches. The upper edge of the partition wall can form a part of the upper edge of the fastener. The upper edge of the fastener at the partition wall can be at the same level or higher or lower than the upper edge of the fastener outside the fastening notches. The partition wall strengthens the fastener. The partition wall enables different functions to be placed between the fastening notches, protected by the profile placed on top of it.

In one embodiment, at least one cable recess is formed on an edge of the fastener for placing cables bypassing the fastening arrangement. The cable recess can be arranged in the space between the fastening notches, for example in the partition wall located there. The cable recess can be an opening, i.e. a hole formed in the fastener, or an open recess that reaches up to the edge of the fastener. Cables or other wires are easy to place and fasten neatly in the cable recess. If the cable recess is at the upper edge of the fastener, i.e. between the fastening notches, for example in the partition wall, the cables remain protected by the profile from UV radiation or other weather phenomena. Neat cabling increases reliability and safety of the equipment.

In one embodiment, the fastening notch of the fastener with its fastening form is formed on that edge of the plate-like fastener, which is not intended to be against the structure. It is easy to place the profile in such a fastening notch.

In one embodiment, the plate-like fastener is fixed in a position perpendicular to the structure. This way, the arrangement is simple and sturdy.

The fastening notch can be, for example, a single recess with a fastening form at both ends. The bottom of the fastening notch can be straight, for example in the direction of the fastener. It is also conceivable that the fastening notch consists of several recesses. There is more than one fastening notch, for example in such a way that each fastening form has its own fastening notch with a bottom.

The profile can be, for example, an elongated metal or plastic object. In one embodiment, the profile is made of relatively thin, for example, sheet material by bending. In one embodiment, the profile is mainly U or V shaped in cross-section, in such a way that fastening folds are formed at the ends of the sides of the letter U or V. In one embodiment, the fastening folds are formed by bending the edges away from the center of the letter U or V, for example at an angle of 30-85 degrees or 45-60 degrees in respect of the sides.

In one embodiment, the fastening folds of the profile are mirror images of each other. In one embodiment, the profile is symmetrical in respect of a plane in the longitudinal direction of the profile. This way, the profile can be fastened to the fasteners in either direction.

Between the fastening folds of the profile, for example at the bottom of a U- or V-shaped profile, there is a support surface of the profile on which the energy collecting device to be fastened to the structure can be supported. The support surface can have fastening means, for example openings for screws.

In one embodiment, a separate device support intended for holding the energy collecting device firmly in place is arranged on the profile, for example on its support surface. In one embodiment, the device support has a bottom part that can be fastened to the profile, a holder for holding the energy collecting device, and a frame between them. In one embodiment, a part of the energy collecting device is placed between the holder and the profile. In one embodiment, the body of the holder is made of a flexible material, for example a suitable metal. The holder is in rest position at a rest distance from the bottom part or profile. The rest distance can then determine the largest thickness of the part of the energy collecting device to be placed on the device support. When such a holder moves closer to the bottom part or profile, for example by turning a tension screw, the energy collecting device is squeezed between the holder and the bottom part or profile. In one embodiment, the energy collecting device is fastened with several device supports placed on different sides of the energy collecting device.

In one embodiment, the fastening forms of the fastener and the fastening folds of the profile are shaped so that when the profile is locked to the fastener, the fastening forms prevent the movement of the fastening folds away from the structure and/or towards the structure. The locked profile cannot therefore be removed from the fastener by moving it away from the structure and/or towards the structure.

Now it has been unexpectedly noticed that it is advantageous if the two fastening forms of the fastener are made of different shapes and, viewed in the direction of the profile, asymmetrical with each other. This enables different functions of the fastening forms. The direction of the profile refers to the longitudinal direction of the elongated profile.

In one embodiment, the first fastening form of the fastening notch comprises a first locking form, which prevents movement of the first fastening fold arranged inside the first fastening form in the direction of the fastener towards the second fastening form when the profile is locked into the fastener. The first fastening form can also prevent movement of the first fastening fold in the direction of the fastener away from the second fastening form. The locking form therefore prevents the locked profile from detaching from the fastener.

In one embodiment, the second fastening form allows movement of the second fastening fold arranged inside it in the direction of the fastener towards the first fastening form. The second fastening form can also prevent movement of the first fastening fold in the direction of the fastener away from the first fastening form. In other words, while the movement of the first fastening fold in the direction of the fastener towards the second fastening form is prevented, the second fastening fold can be moved towards the first fastening form. The locked profile can thus be removed from the fastener, for example, by pressing the second fastening fold of the profile towards the first, so that the second fastening fold detaches. Thereafter, the first fastening fold of the profile can be detached from the first fastening form.

In one embodiment, the profile is removably fastened to the fasteners. In one embodiment, the second fastening form of the fastening notch comprises a second locking form, which allows movement of the second fastening fold arranged inside the second fastening form in the direction of the fastener towards the first fastening form, but prevents movement of the second fastening fold away from the structure or towards the structure. In this way, the profile stays firmly in the fastener, but on the other hand, it can be easily removed if desired, for example by pressing the second fastening fold of the profile towards the first one.

In one embodiment, the fastener comprises a locking gap leading to the first fastening form along the bottom of the fastening notch, through which the first fastening fold of the profile is to be threaded. The locking gap can be arranged, for example, between the bottom of the fastening notch and the first locking form. The height of the locking gap, i.e. for example the distance between the bottom of the fastening notch and the first locking form, is for example at its smallest a maximum of 10 times, a maximum of 5 times or a maximum of 2 times the material thickness of first fastening fold of the profile. The locking gap is advantageously high enough that the first fastening fold can easily fit through it. On the other hand, the fastening gap is advantageously low enough so that the fastening fold stays locked in the fastening form. In one embodiment, the locking gap is lower than the height of the fastening fold pushed through the locking gap.

In one embodiment, the profile can be in at least two different positions with respect to the fastener, the threading position and the locking position. In the threading position, only the first fastening fold can be placed in the first fastening form and at least close to its locking form. For example, the first fastening fold is then in the direction of the bottom of the fastening notch, whereby it can be threaded through the locking gap. In order to move from the threading position to the locking position, the profile is turned around its longitudinal axis in direction to the profile so that the first fastening fold remains in the first fastening form and the locking form and the second fastening fold moves closer to the second fastening form. In the first locking form, there is at least enough space that the first fastening fold can turn there. Finally, the second fastening fold is placed in the second locking form, whereby the profile is locked into the fastener. Threading is easy. No tools are necessarily needed to fasten the profile. The installation work is safe and fast.

In one embodiment, the locking gap is lower than the height of the first fastening fold to be placed in the first fastening form in the direction of the height of the locking gap. Thus, the locking form does not allow removal of the first fastening fold of the first profile in the locking position by moving it directly towards the second fastening fold. In one embodiment, the locking gap is 1 to 3 mm, 1.5 mm to 2.5 mm, 1.5 mm to 2 mm in height. In one embodiment, the material thickness of the first fastening fold of the profile pushed through the locking gap is 0.7 mm to 2 mm, 0.9 to 1.4 mm, 1 to 2.5 mm.

In one embodiment, the profile is adapted to be fastened to the fastener only so that the first fastening fold of the profile is first placed in the first fastening form of the fastening notch and only after that the second fastening fold of the profile can be placed in the second fastening form of the fastening notch. This forces the profile to be installed securely.

In one embodiment, the profile is arranged to be detached from the fastener only so that the second fastening fold of the profile must first be detached from the second fastening form, after which the profile is turned around its longitudinal axis in the direction of the profile, which enables the first fastening fold to be removed from the first locking form and the fastening form. Only after this can the profile be lifted out of touch of the fastener. Thus, the profile does not come off the fastener accidentally. When a solar panel or other device is fastened to several fasteners, it prevents turning of individual profiles. Therefore, when the solar panels or other devices are installed, the profiles cannot come off from the fasteners without breaking them or the profiles.

In one embodiment, the profile has a flexible structure such that the first fastening fold and the second fastening fold can be moved temporarily towards each other by hand, for example by squeezing. In this way, the profile can fit in through a fastening notch that is narrower than it. When the squeezing is stopped, such profile returns to its normal shape due to spring force. In one embodiment, the distance between the ends of the fastening folds of the profile is exactly the same or slightly greater in the rest position than the maximum distance between the inner walls of the first and second fastening form in the direction of the fastener. Thus, in the locking position, the spring force of the profile presses the ends of the fastening folds against the walls of the fastening forms, preventing the movement of the profile in the locking position in the fastener.

In one embodiment, at least two fasteners are fastened to the structure in such a way that the first fastening form is placed higher than the second fastening form. This way the profile of the fastening arrangement fastened, for example, to a wall or a slanted roof does not come off from the fasteners, even if someone stands on them or hangs from them.

In one embodiment, at least two fasteners are fastened to the structure in parallel, i.e. so that the directions of the fasteners are parallel. In this way, the same profile can be easily fastened to these fasteners.

### BRIEF DESCRIPTION OF THE FIGURES

The invention is described in more detail below with reference to the enclosed schematic drawing, in which
- Figure 1: shows the fastening arrangement according to the invention as a perspective view, and
- Figure 2: shows the fastening arrangement of Figure 1 depicted in the direction of the fastener.
- Figure 3: shows the fastening arrangement according to the invention in the first position,
- Figure 4: shows the fastening arrangement of Figure 3 in the second position,
- Figure 5: shows the fastening arrangement of Figure 3 in the third position,
- Figure 6: shows a fastener according to the invention.

### DETAILED DESCRIPTION OF EXAMPLES OF THE FIGURES

For the sake of clarity, same reference numerals are used in different figures and embodiments for some of the corresponding parts.

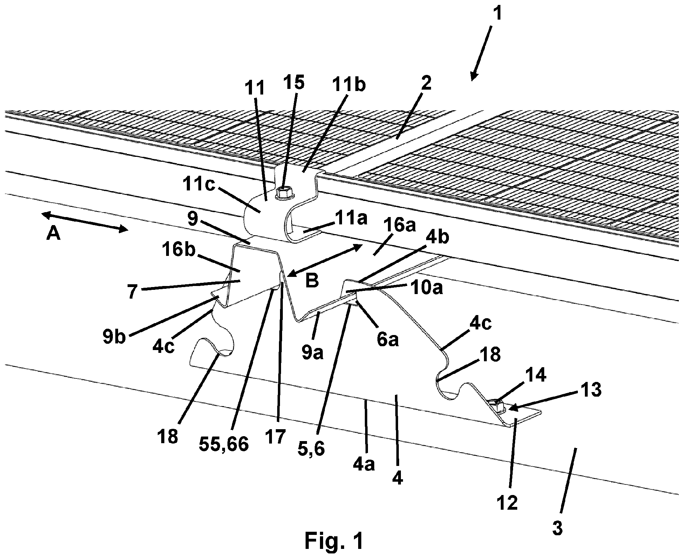

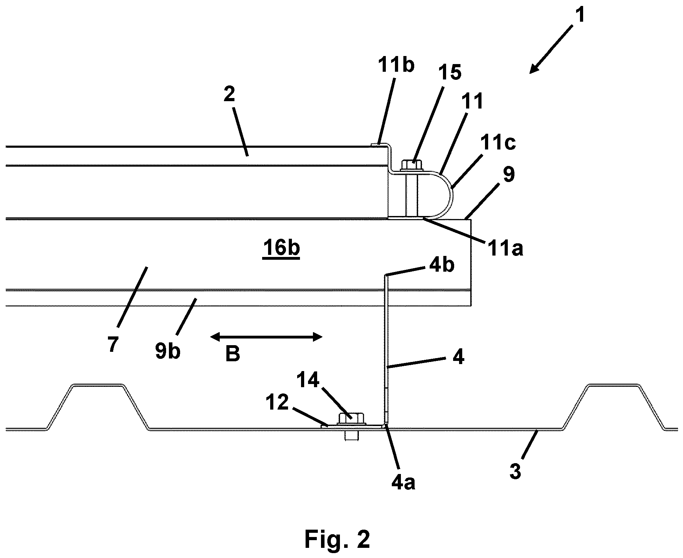

Figures 1 and 2 show a fastening arrangement 1 according to the invention, with the help of which a solar panel 2 is installed on a slanted roof 3 of a house. Figure 1 is depicted from a slanted direction for the sake of clarity, in reality the right edge of the figure is higher than the left edge. Figures 1 and 2 show the fastening of one side of the solar panel near its lower edge. Corresponding fastening arrangements are also arranged elsewhere, for example on one lower edge and both upper edges of the solar panel 2 (not shown). At the lower edge 4a of the mainly plate-like metal fastener 4, there is a flange 12 placed against the roof, which flange has openings 13 (not shown in the figures), through which screws 14 are placed, with which the fastener 4 is securely fastened to the roof 3. A first fastening notch 6 and a second fastening notch 66 are formed on the upper edge 4b of the fastener 4. The fastening notch has a straight bottom 5, 55 in the direction of the fastener A and at its end either a first fastening form 6a or a second fastening form 6b. An elongated profile 7 is fastened to the fastening notches 6 and 66. The profile 7 is also fastened to another fastener similar to the fastener 4, which is not shown in the figures, but which is on the opposite side of the solar panel 2 in the figure 1. The profile is in the direction of the profile B, i.e. perpendicular to the direction of the fastener A. The cross-section of the profile 7 resembles an upside-down letter U. A device support 11 is fastened with a screw 15 to the uppermost situated support surface 9 of the profile 7, i.e. as if to the bottom of the letter U. The device support has a bottom part 11a and a holder 11b that can be fastened to the profile 7, and between them an arc-like body 11c. The edge of the solar panel 2 is placed between the holder 11b and the support surface 9 of the profile. In Figures 1 and 2, the device support 11 is shown tightened against the edge of the solar panel 2. It is not shown in the figures, but when the screw 15 is unscrewed, the holder 11b is at rest position and at a rest distance from the bottom part 11a. The rest distance therefore at least roughly determines the maximum thickness of the edge of the solar panel 2 to be placed on the device support 11. The holder body 11c is made of a flexible material, for example a suitable metal. When tightening the screw 15, the holder 11b moves closer to the bottom part 11a. At the same time, the edge of the solar panel 2 is pressed between the holder 11b and the support surface 9 of the profile, to the position shown in figures 1 and 2. In order to fasten the solar panel 2 firmly, several device supports 11 have been placed on different sides of the solar panel.

On both sides of the support surface 9 of the profile are the sides 16a and 16b of the profile, i.e. like the sides of the letter U. At the free ends of the sides 16a and 16b, away from the support surface 9, a first fastening fold 9a and a second fastening fold 9b are formed. The fastening folds 9a and 9b are inside the fastening notches 6 and 66. The first fastening fold 9a is inside the first fastening form 6a and the second fastening fold 9b is inside the second fastening form 6b. The profile 7 shown in Figures 1 and 2 is thus in the locked position, i.e. locked to the fastener 4. The fastener 4 of Figures 1 and 2 is fastened to the roof 3 so that the first fastening form 6a is higher than the second fastening form 6b.

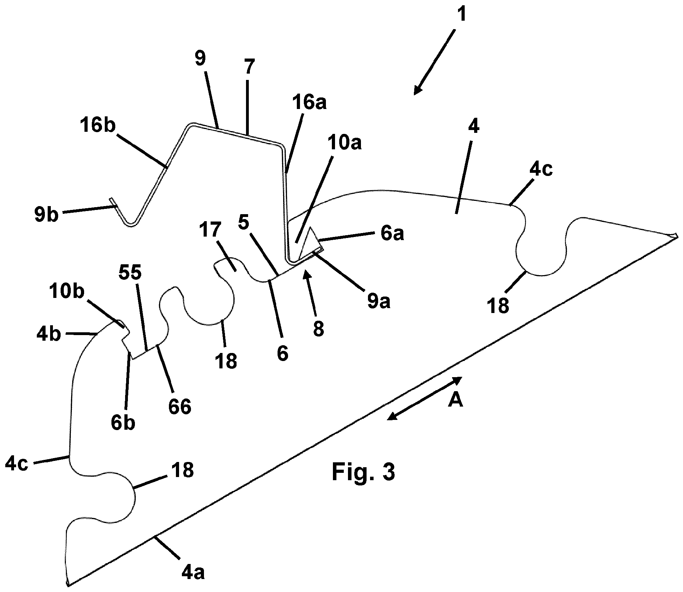

Figures 3 to 5 show a simplified example of locking the profile 7 according to the invention to the fastener 4. The fastener 4 and the profile 7 are shown as viewed in the direction of the profile (direction B in Figures 1 and 2). The fastener 4 is fastened at its bottom edge 4a to, for example, a slanted roof (not shown), which is why the right edge of the fastener 4 in the figure is higher than the left edge.

The lower edge 4a and the upper edge 4b of the fasteners in Figures 1 to 5 are mainly straight as to the parts next to fastening forms. Parts of the side edges 4c are rounded into curves.

Figures 3 to 5 show that the two fastening forms 6a and 6b of the fastener 4 are of different shapes with each other and, viewed in the direction of the profile B, are asymmetrical with each other. Due to their different shapes, the functions of fastening forms 6a and 6b are different from each other.

In the situation of Figure 3, the profile 7 is in the threading position with respect to the fastener 4. The first fastening fold 9a is in the fastening notch 6 and threaded into the first fastening form 6a from through the locking gap 8 between the bottom of the fastening notch 5 and the first locking form 10a. The location of the locking gap 8 is indicated by an arrow. The second fastening fold 9b is not in the second fastening notch 66.

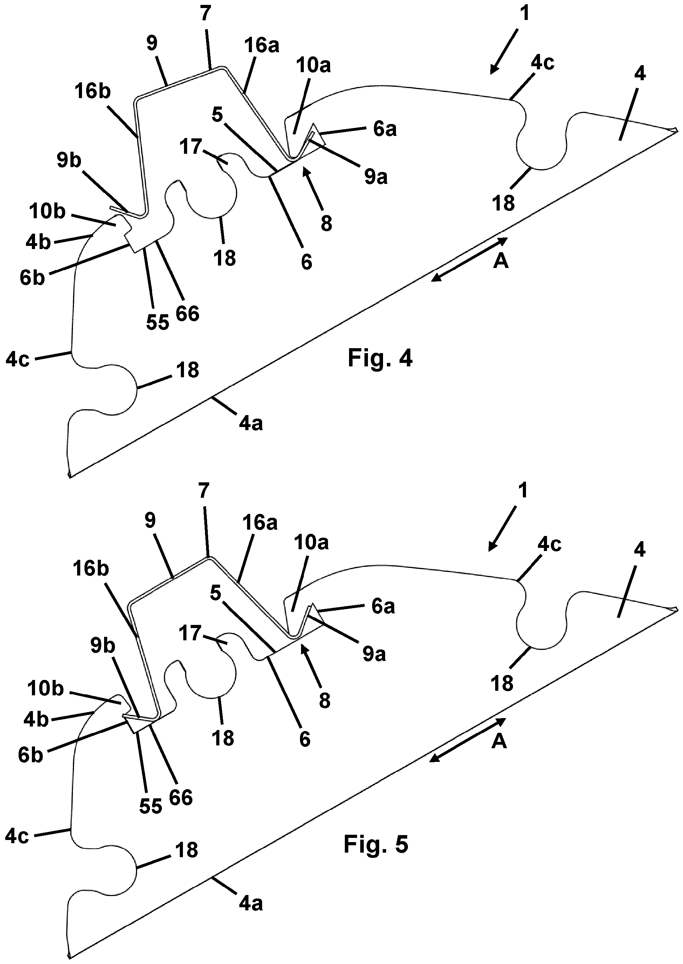

In the situation of Figure 4, the profile 7 has been turned somewhat from the threading position of Figure 3 towards the locking position. The first fastening fold 9a is turned upwards in the first fastening form 6a. The second fastening fold 9b is not in the fastening notch 66. However, it should be noted that if one now tried to move the profile in the direction of the fastener A towards the second fastening form 6b, it would not move, because the first locking form 10a would prevent movement of the first fastening fold 9a.

In the situation in Figure 5, profile 7 has been turned more compared to the situation in Figure 4. The second fastening fold 9b is in the fastening notch 66 and its end is in the fastening form 6b, against the second locking form 10b. The first fastening fold 9a has turned upwards in the first fastening form 6a and completely against the locking form 10a. The first fastening fold 9a cannot be moved in the direction of the fastener A towards the second fastening fold 9b. Profile 7 is thus in locking position.

Between the situations in figures 4 and 5, the second fastening fold 9b of the profile has had to be pressed slightly from the rest position of figure 4 towards the first fastening fold 9a, so that the second fastening fold 9b has fit into the second fastening notch 66. The required pressing distance is typically the horizontal length of the second fastening fold 9b, for example less than 10 mm or less than 5 mm. The pressing was stopped when the second fastening fold 9b was against the bottom 55 of the second fastening notch. Thereby, the profile 7 returned to its normal shape due to the spring force and at the same time the second fastening fold 9b moved as shown in Figure 5 to the fastening form 6b, against the second locking form 10b.

The distance between the ends of the fastening folds 9a and 9b of the profile is in rest position the same or slightly greater than the maximum distance between the inner walls of the first and second fastening forms 6a and 6b in the direction of the fastener A. Thus, in the locking position, the spring force of the profile 7 presses the ends of the fastening folds 9a and 9b against the walls of the fastening forms 6a and 6b, preventing the movement in the fastener 4 of the profile 7 in the locking position, for example due to wind.

In the locking position shown in Figure 5, the locking forms 10a and 10b prevent the movement of the profile 7 both in the direction of the fastener A and away from the fastening notches 6 and 66, i.e. away from the fastener 4. The second fastening form 6b with the locking form 10b allows the movement of the second fastening fold 9b arranged inside it in the direction of the fastener A towards the first fastening form 6a. In this way, the profile 7 can be opened from the locking position, for example by pressing the second fastening fold 9b towards the first fastening fold 9a.

On the upper edge 4b of the fastener, between the first and second fastening forms 6a, 6b, a partition wall 17 separating them is formed. The partition wall 17 is a protrusion whose top edge is at the same level as the upper edge 4b of the fastener outside the fastening notches 6a and 6b. It can be said that the upper edge of the partition wall forms part of the upper edge 4b of the fastener. The partition wall strengthens the fastener. Cable recesses 18 are formed in both the upper edge of the partition wall 17 and both side edges 4c of the fastener. The wiring bypassing the fastening arrangement can be placed and fastened in them, for example the electric cables leading to the solar panels 2. In the cable recess in the partition wall 17, the cables remain protected by the profile 7 during normal use.

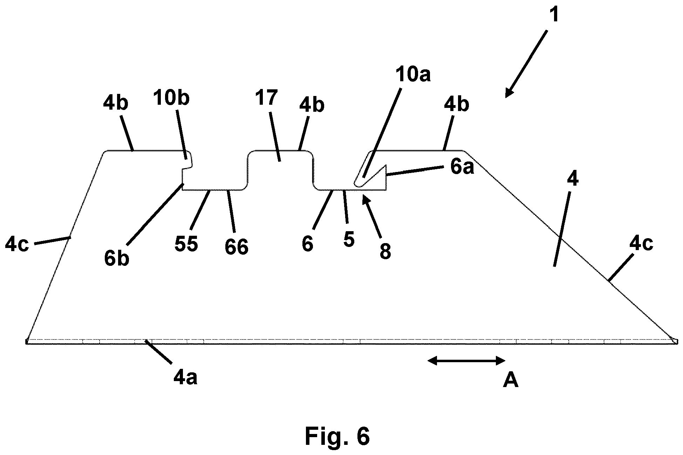

Figure 6 shows an example of the fastener 4 according to the invention, which does not have cable recesses 18. The upper edge 4b and the side edges 4c of the fastener are mainly straight in their general shape, without significant curvatures. Lower edge 4a is straight. Fastener 4 is trapezoidal in general shape. Otherwise, the structure and function of the fastener in Figure 6 corresponds to the fasteners 4 in Figures 1 to 5.

It is not intended to limit the invention to the examples described above, but the scope of the invention is determined by the independent claims. The dependent claims present some advantageous embodiments of the invention.

## Claims

1. A fastening arrangement (1) for fastening an energy collecting device (2) to a structure (3), which fastening arrangement comprises
- at least two fasteners (4) adapted to be fastened to the structure (3), which at least two fasteners (4) comprise a fastening notch (6, 66) and two fastening forms (6a, 6b), and
- a profile (7) which is adapted to support the energy collecting device (2), which profile (7) comprises two fastening folds (9a, 9b) which are adapted to be fastened to the fastening forms (6a, 6b) of the fastener,
**characterized in that** the fastener (4) comprises at least two fastening notches (6, 66), of which at least two have a fastening form (6a, 6b), whereby the first fastening fold (9a) is fastened to the fastening form (6a) of the first fastening notch (6) and the second fastening fold (9b) is fastened to the fastening form (6b) of the second fastening notch (66).

2. Fastening arrangement (1) according to claim 1 comprising
- the at least two fasteners (4) adapted to be fastened to the structure (3), such as a roof or a wall, whereby each fastener (4) comprises at least one fastening notch (6, 66) comprising at least one bottom (5, 55) whereby the first and the second fastening form (6a, 6b) are formed in connection with it or them, which fastening forms are at a distance from each other in the direction of the fastener (A);
- an elongated profile (7), which is adapted to be fastened to the fastening notches (6, 66) of at least two fasteners in the direction of the profile (B), i.e. perpendicular to the direction of the fastener (A), said profile comprising
∘ a support surface (9) on which the energy collecting device (2) can be supported and which is intended to face away from the fastener (4);
∘ the first and the second fastening fold (9a, 9b), which are on both sides of the support surface and each of which can be adapted inside a fastening notch (6, 66) and against one fastening form (6a, 6b) of it, so that the profile (7) is locked into the fastener (4),
**characterized in that** there is more than one fastening notch (6, 66), so that each fastening form (6a, 6b) has its own fastening notch (6, 66) with a bottom (5, 55), whereby the first fastening fold (9a) of the profile (7) is adapted to be fastened to the first fastening notch (6) and the second fastening fold (9b) of the profile is adapted to be fastened to the second fastening notch (66).

3. Fastening arrangement according to claim 1 or 2, **characterized in that** the two fastening forms (6a, 6b) of one fastener are of different shapes with each other and asymmetrical with each other when viewed in the direction of the profile (B).

4. Fastening arrangement according to any previous claim, **characterized in that** a partition wall (17) is formed in the upper edge (4b) of the fastener, between the first and the second fastening notch (6, 66).

5. Fastening arrangement according to any previous claim, **characterized in that** at least one cable recess (18) is formed in an edge (4a, 4b) of the fastener (4) for placing cables bypassing the fastening arrangement (1).

6. Fastening arrangement according to claim 5, **characterized in that** the cable recess (18) is formed in the partition wall (17).

7. Fastening arrangement according to any previous claim, **characterized in that** the first fastening form (6a) comprises a first locking form (10a), which prevents movement of the first fastening fold (9a) arranged inside the first fastening form (6a) in the direction of the fastener (A) towards the second fastening form (6b), when the profile (7) is locked into the fastener (4).

8. Fastening arrangement according to any previous claim, **characterized in that** the fastener (4) comprises a locking gap (8) leading to the first fastening form (6a) along the bottom of the first fastening notch (5), through which locking gap the first fastening fold (9a) of the profile is arranged to be threaded.

9. Fastening arrangement according to any previous claim, **characterized in that** the second fastening form (6b) of the second fastening notch allows movement of the second fastening fold (9b) arranged inside it in the direction of the fastener (A) towards the first fastening form (6a).

10. Fastening arrangement according to any previous claim, **characterized in that** said at least two fasteners (4) are fastened to the structure (3) so that the first fastening form (6a) is higher than the second fastening form (6b).

11. A roof mounting fastener (4) adapted to be fastened to a structure (3), such as a roof or a wall, whereby the fastener (4) comprises a fastening notch (6, 66) comprising a bottom (5, 55) and a first and a second fastening form (6a, 6b), which fastening forms are at a distance from each other in the direction of the fastener (A), whereby each fastening form is arranged to fasten to a fastening fold (9a, 9b) of a profile (7), **characterized in that** there is more than one fastening notch (6, 66), so that each fastening form (6a, 6b) has its own fastening notch (6, 66) with a bottom (5, 55), whereby the first fastening fold (9a) of the profile (7) is adapted to be fastened to the first fastening notch (6) and the second fastening fold of the profile ( 9b) is adapted to be fastened to the second fastening notch (66).

12. A method for fastening an energy collecting device (2) to a structure (3) with a fastening arrangement (1), which method comprises at least the following steps:
- at least two fasteners (4) are fastened to a structure (3), such as a roof or a wall, whereby each fastener (4) comprises at least one fastening notch (6, 66) comprising a bottom (5, 55) and formed in connection with it or them, a first fastening form (6a) and a second fastening form (6b), which fastening forms are at a distance from each other in the direction of the fastener (A);
- an elongated profile (7) is fastened to the fastening notches (6, 66) of at least two fasteners in the direction of the profile (B), i.e. perpendicular to the direction of the fastener (A), said profile (7) comprising
∘ a support surface (9) on which the energy collecting device (2) can be supported and which is arranged to face away from the fastener (4),
∘ a first fastening fold (9a) and a second fastening fold (9b), which are on both sides of the support surface (9), and each of which are adapted inside a fastening notch (6, 66) against one fastening form (6a, 6b) of it, and thus locking the profile (7) into the fastener (4),
**characterized in that** in one fastener (4) there is more than one fastening notch (6, 66), so that each fastening form (6a, 6b) has its own fastening notch (6, 66) with a bottom (5, 55), whereby the first fastening fold (9a) of the profile (7) is fastened to the first fastening notch (6) and the second fastening fold (9b) of the profile is fastened to the second fastening notch (66).

13. Method according to claim 12, **characterized in that** the two fastening forms (6a, 6b) of the fastener (4) are of different shapes with each other and asymmetrical with each other when viewed in the direction of the profile (B), and the first fastening form (6a) of the fastening notch comprises a first locking form (10a), whereby in the method, when the profile is locked into the fastener:
- preventing movement of the first fastening fold (9a) arranged inside the first fastening form (6a) in the direction of the fastener (A) towards the second fastening form (6b) by the first locking form (10a);
while simultaneously
- the second fastening form (6b) allows movement of the second fastening fold (9b) arranged inside it in the direction of the fastener (A) towards the first fastening form (6a).

14. Method according to claim 12 or 13, **characterized in** adapting the first fastening fold (9a) in the first fastening form (6a) by threading the first fastening fold (9a) through a locking gap (8) between the bottom of the first fastening notch (5) and the first locking form (10a), the locking gap leading to the first fastening form (6a), and only thereafter placing the second fastening fold (9b) of the profile in the second fastening form (6b) of the second fastening notch (6b).

15. Method according to any previous claim 12-14, **characterized in that** said at least two fasteners (4) are fastened to the structure (3) so that the first fastening form (6a) is higher than the second fastening form (6b).
